# EUROPEAN PATENT SPECIFICATION

(11) **EP 2 128 880 B1**
(45) Date of publication and mention of the grant of the patent: **01.07.2015**
(21) Application number: 09251415.7
(22) Date of filing: 28.05.2009
(51) Int. Cl.: H01G 9/20

(54) **Coating material for forming a porous metal oxide semiconductor film for a photovoltaic cell**
Beschichtungsmaterial zum Ausbilden einer porösen Metalloxid-Halbleiterschicht für ein Photoelement
Matériau de revêtement pour former un film semi-conducteur d'oxyde métallique poreux pour une cellule photovoltaïque

(30) Priority: 30.05.2008 JP 2008142876
(43) Date of publication of application: 02.12.2009
(73) Proprietor: JGC Catalysts and Chemicals Ltd., Kawasaki-shi, Kanagawa 212-0013 (JP)
(72) Inventor: Mizuno, Takaki, Kitakyushu-shi, Fukuoka 808-0027 (JP); Koyanagi, Tsuguo, Kitakyushu-shi, Fukuoka 808-0027 (JP)
(74) Representative: Matthews, Derek Peter

(56) References cited:
- EP-A1- 1 717 898
- US-A1- 2003 150 485
- GRATZEL M ET AL: "Low cost photovoltaic modules based on dye sensitized nanocrystalline titanium dioxide and carbon powder", SOLAR ENERGY MATERIALS AND SOLAR CELLS, ELSEVIER SCIENCE PUBLISHERS, AMSTERDAM, NL, vol. 44, no. 1, 30 October 1996 (1996-10-30), pages 99-117, XP004053970, ISSN: 0927-0248, DOI: 10.1016/0927-0248(96)00063-3

## Description

### TECHNICAL FIELD

The present invention relates to a coating material for forming a porous metal oxide semiconductor film for photovoltaic cell, which is capable of forming a porous metal oxide semiconductor film of a uniform and large thickness for photovoltaic cell with a small number of coating times, and a photovoltaic cell having a porous metal oxide semiconductor film formed by the use of the coating material.

### BACKGROUND ART

Metal oxide semiconductor materials having high band gap have been used not only as photoelectric conversion materials and photocatalyst materials but also for photosensors, electricity-storing materials (batteries), etc.

Of these, the photoelectric conversion materials are materials capable of continuously taking out light energy as electric energy and are materials to convert light energy into electric energy taking advantage of electrochemical reaction between electrodes. When such a photoelectric conversion material is irradiated with light, an electron is generated on one electrode side and moves to a counter electrode. The electron having moved to the counter electrode then moves in the electrolyte as an ion and returns to the former electrode. This energy conversion is carried out continuously, and hence such a material is utilized for, for example, solar cells.

A general solar cell is constructed by first forming, as an electrode, a film of a semiconductor for a photoelectric conversion material on a support such as a glass plate on which a transparent conductive filmhas been formed, thenpreparing a different support such as a glass plate on which a transparent conductive film has been formed as a counter electrode, and enclosing an electrolyte between these electrodes.

When a photosensitizer adsorbed on the semiconductor film for a photoelectric conversion material is irradiated with, for example, sunlight, the photosensitizer absorbs light in the visible region and is excited. An electron generated by this excitation moves into the semiconductor, then moves to the transparent conductive glass electrode and moves to the counter electrode through a conductor wire that connects the two electrodes to each other. The electron having moved to the counter electrode reduces the oxidation-reduction system in the electrolyte. On the other hand, the photosensitizer that has caused the electron to move into the semiconductor becomes in a state of an oxidant, and this oxidant is reduced by the oxidation-reduction system in the electrolyte and returns to the original state. Thus, the electron continuously flows, and the photoelectric conversion material functions as a solar cell.

As this photoelectric conversion material, a material in which a surface of a semiconductor film is allowed to adsorb a spectral sensitizing dye having absorption in the visible region is used. For example, in Japanese Patent Laid-Open Publication No. 220380/1989 (patent document 1), a solar cell having a spectral sensitizing dye layer comprising a transition metal complex, such as a ruthenium complex, on a surface of a metal oxide semiconductor film is described. In International Published Patent Application No. WO 91/16719 (patent document 2), a solar cell having a spectral sensitizing dye layer comprising a transition metal complex, such as a ruthenium complex, on a surface of a metallic ion-doped titanium oxide semiconductor layer is described. Further work along these lines from the same inventor is disclosed in Grätzel et al in Solar Energy Materials and Solar Cells 44 (1996), pp. 99-117 (non-patent document 1).

Such a semiconductor film is formed by coating an electrode substrate with a coating material comprising finely divided particles, such as a titania sol, and then calcining it. This semiconductor film needs to adsorb a spectral sensitizing dye, and hence the coating step is repeated to form a porous and thick film.

In Japanese Patent Laid-Open Publication No. 49311/2006 (patent document 3), it is disclosed that when a light-reactive layer (semiconductor layer) in which at least some of macro-particles having a mean particle diameter of not less than 100 nm and nano-particles having a mean particle diameter of not more than 50 nm are chemically bonded to one another is used, an effect of enhancing scattering of light and/or an effect of reducing electrical impedance is exerted, and hence arelativelyhighefficiency, a relatively high voltage (open circuit), a relatively high Jcs and/or a relatively high film factor is given.

Further, it has been studied to increase adsorption quantity of the spectral sensitizing dye onto the titanium oxide semiconductor film surface or to enhance transfer property of the electron in the titanium oxide semiconductor film. For example, it has been proposed that in the formation of a titanium oxide semiconductor film, steps of applying a titania sol onto an electrode substrate, drying it and then calcining it are carried out repeatedly to form a porous and thick film, and by the use of this porous semiconductor film, the amount of Ru complex supported on the surface is increased.

Lastly, a photoelectric cell comprising titanium oxide particles having an average particle diameter of 5 to 600 nm and a pore volume of 0.05 to 0.8 ml/g is disclosed in U.S. Published Patent Application No. 2003/0150485 (patent document 4).
Patent document 1: Japanese Patent Laid-Open Publication No. 220380/1989
Patent document 2: International Published Patent Application No. WO 91/16719
Patent document 3: Japanese Patent Laid-Open Publication No. 49311/2006
Patent document 4: U.S. Published Patent Application No. 2003/0150485
Non-patent document 1: Grätzel et al in Solar Energy Materials and Solar Cells 44 (1996), pages 99-117

### DISCLOSURE OF THE INVENTION

### PROBLEM TO BE SOLVED BY THE INVENTION

However, in the case where a conventional coating material comprising finely divided particles, such as a titania sol, is applied to form a semiconductor film, formation of a thick film is difficult, and because steps of coating, drying and calcining are repeated many times, the thickness of the resulting semiconductor film sometimes becomes ununiform, or cracks sometimes occur. In addition, because of repetition of coating and drying steps, the film formation process takes time to thereby lower productivity and economical efficiency, so that improvement in these points have been desired.

### MEANS TO SOLVE THE PROBLEM

In the light of the above problems, the present inventors have earnestly studied. As a result, they have found that by using a coating solution containing porous titanium oxide fine particle aggregates and titanium oxide fine particles having particle diameters smaller than those of the aggregates, a uniform and thick semiconductor film can be formed with a small number of coating times, and they have accomplished the present invention.
[1] A coating material for forming a porous metal oxide semiconductor film for photovoltaic cell, comprising:
   porous titanium oxide fine particle aggregates having a mean particle diameter of 0.5 to 10 µm and a pore volume of 0.1 to 0.8 ml/g, and
   unaggregated titanium oxide fine particles having a mean particle diameter of 5 to 400 nm, wherein the porous titanium oxide fine particle aggregate is an aggregate of at least one kind of fine particles selected from the group consisting of:
      (1) particulate titanium oxide fine particles having a mean particle diameter of 5 to 400 nm,
      (2) fibrous titanium oxide fine particles having a mean width (W_{F}) of 5 to 40 nm, a mean length (L_{F}) of 25 to 1000 nm and an aspect ratio (W_{F})/(L_{F}) of 5 to 200, and
      (3) tubular titanium oxide fine particles having a mean tube outer diameter (Dₒᵤₜ) of 5 to 40 nm, a mean length (Lₚ) of 25 to 1000 nm and an aspect ratio (Lₚ)/(Dₒᵤₜ) of 5 to 200.
[2] The coating material for forming a porous metal oxide semiconductor film for photovoltaic cell of [1], wherein the porous titanium oxide fine particle aggregates further contain a titanium oxide binder selected from a gel or a sol of orthotitanic acid, peroxotitanic acid, and a titania sol.
[3] The coating material for forming a porous metal oxide semiconductor film for photovoltaic cell of [1] or [2], wherein the porous titanium oxide fine particle aggregates support a finely divided titanium oxide precursor on their surfaces.
[4] The coating material for forming a porous metal oxide semiconductor film for photovoltaic cell of any one of [1] to [3], wherein the porous titanium oxide fine particle aggregates have been treated with a titanium compound.
[5] Use of a coating material of any on of [1] to [4] in the manufacture of a photovoltaic cell comprising:
   a first substrate (5) having an electrode layer (1) on its surface and having a porous metal oxide semiconductor film (2) which has adsorbed a photosensitizer and is formed on the surface of the electrode layer (1),
   a second substrate (6) having an electrode layer (3) on its surface,
   said first substrate (5) and said second substrate (6) being arranged in such a manner that the said electrode layers face each other, and
   an electrolyte layer (4) which is provided between the porous metal oxide semiconductor film (2) and the electrode layer (3),
[6] Use according to [5], wherein the content of the porous titanium oxide fine particle aggregates in the semiconductor film is in the range of 30 to 70% by weight, and the content of the unaggregated titanium oxide fine particles is in the range of 30 to 70% by weight, with the proviso that the total of the aggregates and the unaggregated fine particles is 100% by weight.
[7] Use according to [5] or [6], wherein a titanium oxide thin film derived from peroxotitanic acid is provided between the electrode layer and the porous metal oxide semiconductor film.
[8] Use according to [7], wherein the titanium oxide thin film has a film thickness of 10 to 70 nm, a pore volume of 0.01 to 0.20 ml/g and a mean pore diameter of 0.5 to 5.0 nm.

### EFFECT OF THE INVENTION

According to the present invention, there can be provided a coating material for forming a porous metal oxide semiconductor film for photovoltaic cell, which is capable of forming a porous metal oxide semiconductor film of a uniform thickness for photovoltaic cell with a small number of coating times, and a photovoltaic cell which has a porous metal oxide semiconductor film formed by the use of the coating material and is excellent in photoelectric conversion efficiency.

### BRIEF DESCRIPTION OF THE DRAWING

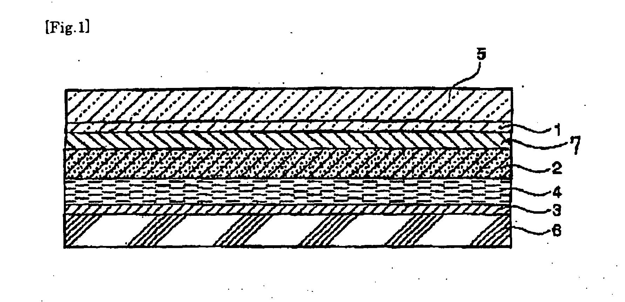

Fig. 1 is a schematic sectional view showing an example of a photovoltaic cell of the present invention.

### Description of numerical symbols

- 1:: electrode layer (1)
- 2:: semiconductor film
- 3:: electrode layer (3)
- 4:: electrolyte layer
- 5:: first substrate
- 6:: second substrate
- 7:: titanium oxide thin film

### BEST MODE FOR CARRYING OUT THE INVENTION

The best mode for carrying out the present invention is described in detail hereinafter.

### Coating material for forming porous metal oxide semiconductor film for photovoltaic cell

The coating material for forming a porous metal oxide semiconductor film for photovoltaic cell according to the invention comprises specific porous titanium oxide fine particle aggregates and specific unaggregated titanium oxide fine particles.

### Porous titanium oxide fine particle aggregates

The porous titanium oxide fine particle aggregates for use in the invention are aggregates composed of one or more kinds of fine particles selected from particulate titanium oxide fine particles (1), fibrous titanium oxide fine particles (2) and tubular titanium oxide fine particles (3), and have specific porosity. The porous titanium oxide fine particle aggregate may be single aggregate of the particulate titanium oxide fine particles (1), the fibrous titanium oxide fine particles (2) or the tubular titanium oxide fine particles (3), or may be an aggregate of a mixture of two or more kinds of them.

The "aggregate" referred to hereinmeans particles which are aggregated, preferably in the shape of a sphere, to such an extent that the individual particles can maintain their shapes without being dispersed or broken in the coating material for forming a porous metal oxide semiconductor film for photovoltaic cell or in the porous metal oxide semiconductor film after film formation. The shape of the aggregate is maintained even in the coating material and in the coating film (semiconductor film). In the aggregates, an after-mentioned binder may be contained in order to bind the fine particles to one another. The binder is described later.

The particulate titanium oxide fine particles (1) for use in the invention have a mean particle diameter of 5 to 400 nm, preferably 10 to 100 nm. If the particulate titanium oxide fine particles (1) are too small, obtaining them is per se difficult, and besides, pore volume of the titanium oxide fine particle aggregates obtained by the use of them is decreased. Moreover, since the surface area of the aggregates is also decreased, the adsorption quantity of the photosensitizer is decreased, or the diffusion property of the electrolyte is lowered to sometimes bring about back current, and hence the photoelectric conversion efficiency sometimes becomes insufficient. If the particulate titanium oxide fine particles (1) are too large, strength of the resulting porous titanium oxide fine particle aggregates becomes insufficient. Moreover, because of large particle diameters of the particulate titanium oxide fine particles (1), the specific surface area is decreased, and the adsorption of the photosensitizer is reduced. Accordingly, the photoelectric conversion efficiency sometimes becomes insufficient.

The shape of the particulate titanium oxide fine particle (1) is a sphere, a die or the like and is distinguished from that of the later-described fibrous particle, etc. The particulate titanium oxide fine particle means a particle having an aspect ratio of usually not more than 4, preferably not more than 2.

The particulate titanium oxide fine particles (1) are not specifically restricted provided that the mean particle diameter is in the aforesaid range, and hitherto publicly known titanium oxide fine particles can be employed. For example, anatase type titanium oxide fine particles disclosed in Japanese Patent Laid-Open Publication No.229139/1988 applied by the present applicant can be preferably employed.

The fibrous titanium oxide fine particles (2) for use in the invention have an aspect ratio of not less than 5 differently from the particulate titanium oxide fine particles, and have a major axis mean width (W_{F}) of 5 to 40 nm, preferably 10 to 30 nm. It is difficult to obtain fibrous titanium oxide fine particles (2) having a mean width (W_{F}) of less than the lower limit of the above range. If the mean width (W_{F}) is too large, the particles themselves are too large, and the specific surface area of the resulting porous titanium oxide fine particle aggregates is decreased. Therefore, the adsorption quantity of the photosensitizer sometimes becomes insufficient.

The mean length (L_{F}) of the fibrous titanium oxide fine particles (2) is in the range of 25 to 1000 nm, preferably 50 to 500 nm. If the mean length (L_{F}) of the fibrous titanium oxide fine particles (2) is shortened and the mean width (W_{F}) thereof is increased, such particles are classified as the aforesaid particulate titanium oxide fine particles (1). It is difficult to obtain fibrous titanium oxide fine particles (2) having a mean length (W_{F}) of less than the lower limit of the above range. If the mean length (L_{F}) of the fibrous titanium oxide fine particles (2) is too long, titanium oxide acting as a binder and added when necessary, such as peroxotitanic acid, is needed in a large amount in order to obtain the porous titanium oxide fine particle aggregates. In this case, pore volume of the resulting porous titanium oxide fine particle aggregates becomes small, and the adsorption quantity of the photosensitizer sometimes becomes insufficient. Moreover, strength of the porous metal oxide semiconductor film using the porous titanium oxide fine particle aggregates sometimes becomes insufficient.

The aspect ratio (W_{F})/(L_{F}) of the fibrous titanium oxide fine particles (2) is in the range of 5 to 200, preferably 10 to 100. Titanium oxide fine particles having an aspect ratio of less than 5 and simultaneously having a mean width (W_{F}) of more than 5 nm are classified as the aforesaid particulate titanium oxide fine particles (1), and it is difficult to obtain fibrous titanium oxide fine particles having an aspect ratio of less than 5 and simultaneously having a mean width (W_{F}) of less than 5 nm.

If the aspect ratio (W_{F})/(L_{F}) of the fibrous titanium oxide fine particles (2) is too high, the length of the fibers of the fine particles is too long, and therefore, titanium oxide acting as a binder and added when necessary, such as peroxotitanic acid, is needed in a large amount in order to obtain the porous titanium oxide fine particle aggregates. As a result, pore volume of the resulting porous titanium oxide fine particle aggregates becomes small, and the adsorption quantity of the photosensitizer sometimes becomes insufficient. Moreover, strength of the resulting porous titanium oxide fine particle aggregates becomes insufficient, and strength of the porous metal oxide semiconductor film also sometimes becomes insufficient.

The fibrous titanium oxide fine particles (2) are not specifically restricted provided that the mean width (W_{F}), the mean length (L_{F}) and the aspect ratio (W_{F}) / (LF) are in the aforesaid ranges, and hitherto publicly known fibrous titanium oxide fine particles can be employed. For example, anatase type fibrous titanium oxide fine particles disclosed in Japanese Patent Laid-Open Publication No. 68001/2005 applied by the present applicant can be preferably employed.

The tubular titanium oxide fine particles (3) for use in the invention are titanium oxide fine particles having a tubular structure.

The tubular titanium oxide fine particles (3) have a mean tube outer diameter (Dₒᵤₜ) of 5 to 40 nm, preferably 10 to 30 nm. The tubular titanium oxide fine particles (3) have a tube thickness of 0.5 to 10 nm, preferably 0.5 to 5 nm, and have a tube inner diameter of 4 to 20 nm, preferably 4 to 15 nm.

It is difficult to obtain tubular titanium oxide fine particles (3) having a mean tube outer diameter (Dₒᵤₜ) of less than the lower limit of the above range. If the (Dₒᵤₜ) is too large, the specific surface area of the resulting porous titanium oxide fine particle aggregates is decreased, and the adsorption quantity of the photosensitizer becomes insufficient, similarly to the fibrous titanium oxide fine particles.

The tubular titanium oxide fine particles (3) have a mean length (Lₚ) of 25 to 1000 nm, preferably 50 to 500 nm. If the mean length (Lₚ) is less than the lower limit of the above range, it is difficult to obtain tubular titanium oxide fine particles (3). If the mean length (Lₚ) is too long, titanium oxide acting as a binder and added when necessary, such as peroxotitanic acid, is needed in a large amount in order to obtain the porous titanium oxide fine particle aggregates. In this case, pore volume of the resulting porous titanium oxide fine particle aggregates becomes small, and the adsorption quantity of the photosensitizer sometimes becomes insufficient. Moreover, strength of the porous metal oxide semiconductor film using the porous titanium oxide fine particle aggregates also sometimes becomes insufficient.

The aspect ratio (Lₚ)/(Dₒᵤₜ) of the tubular titanium oxide fine particles (3) is in the range of 5 to 200, preferably 10 to 100.

If the aspect ratio (Lₚ)/(Dₒᵤₜ) is less than the lower limit of the above range, it is difficult to obtain tubular titanium oxide fine particles (3). If the aspect ratio (Lₚ)/(Dₒᵤₜ) is too high, the amount of titanium oxide acting as a binder and added when necessary, such as peroxotitanic acid, is increased in order to obtain the porous titanium oxide fine particle aggregates. As a result, pore volume of the resulting porous titanium oxide fine particle aggregates becomes small, and the adsorption quantity of the photosensitizer sometimes becomes insufficient. Moreover, strength of the resulting porous titanium oxide fine particle aggregates becomes insufficient, and strength of the porous metal oxide semiconductor film using such porous titanium oxide fine particle aggregates also sometimes becomes insufficient.

The tubular titanium oxide fine particles (3) are not specifically restricted provided that the properties, such as mean tube outer diameter (Dₒᵤₜ), mean length (Lₚ) and the aspect ratio (Lₚ) / (Dₒᵤₜ), are in the aforesaid ranges, and hitherto publicly known tubular titanium oxide fine particles can be employed. For example, anatase type fibrous titanium oxide fine particles disclosed in Japanese Patent Laid-Open Publication No. 137549/2003 applied by the present applicant can be preferably employed.

The mean particle diameter of the porous titanium oxide fine particle aggregates is in the range of 0.5 to 10 µm, preferably 1 to 5 µm. The mean particle diameter of the aggregates is not smaller than the mean length of the fibrous titanium oxide fine particles or the tubular titanium oxide fine particles.

In the case of the porous titanium oxide fine particle aggregates having a too small mean particle diameter, it is difficult to form a porous metal oxide semiconductor film of a uniform and large thickness for photovoltaic cell with a small number of coating times.

If the mean particle diameter of the porous titanium oxide fine particle aggregates is too large, strength of the resulting metal oxide semiconductor film sometimes becomes insufficient, or cracks sometimes occur. In addition, a semiconductor film having a uniform thickness is not obtained occasionally. On this account, control of the distance between an electrode and a counter electrode becomes difficult, and sufficient photoelectric conversion efficiency is not obtained occasionally.

The pore volume of the porous titanium oxide fine particle aggregates is in the range of 0.1 to 0.8 ml/g, preferably 0.2 to 0.65 ml/g.

Porous titanium oxide fine particle aggregates having a small pore volume have a small specific surface area. On this account, the adsorption quantity of the photosensitizer is decreased, and the diffusion property of the electrolyte is lowered to sometimes bring about back current. Therefore, the photoelectric conversion efficiency sometimes becomes insufficient.

If the pore volume of the porous titanium oxide fine particle aggregates exceeds 0.8 ml/g, strength of the porous titanium oxide fine particle aggregates becomes insufficient. Moreover, strength of the resulting metal oxide semiconductor film becomes insufficient, and cracks sometimes occur.

When the pore volume of the porous titanium oxide fine particle aggregates is in the aforesaid range, a sufficient amount of the photosensitizer can be adsorbed, and a porous metal oxide semiconductor film which has sufficient strength and is free from occurrence of cracks can be obtained.

The porous titanium oxide fine particle aggregates may contain, as a binder, a titanium oxide binder selected from a gel or a sol of orthotitanic acid, peroxotitanic acid obtained by dissolving the gel or the sol in hydrogen peroxide, and a titania sol obtained by heat aging the peroxotitanic acid. Detail of the process for preparing the peroxotitanic acid is described later. The orthotitanic acid is prepared by adding aqueous ammonia to a titanium chloride aqueous solution having a temperature of 5 to 65°C, usually 15 to 55°C, and performing neutralization and hydrolysis.

Such peroxotitanic acid or the like acts as a binder and can bind the titanium oxide fine particles to one another, and hence the porous titanium oxide fine particle aggregates are not easily broken. By further calcining the resulting porous titanium oxide fine particle aggregates if necessary, anatase type titanium oxide is obtained. This contributes to adsorption of the photosensitizer, and the photoelectric conversion efficiency is not lowered.

Use of such a binder is preferable in the case where the titanium oxide fine particles are large or they are fibrous or tubular fine particles.

The amount of the binder used is in the range of 1/100 to 30/100, preferably 2/100 to 20/100, the weight of the titanium oxide fine particles, in terms of solids content (TiO₂). If the amount of the binder used is too small, strength of the porous titanium oxide fine particle aggregates sometimes becomes insufficient, and the aggregates are sometimes broken easily, so that the effect of using the porous titanium oxide fine particle aggregates of the invention is not sufficiently obtained occasionally. If the amount of the binder used is too large, pore volume of the resulting titanium oxide fine particle aggregates becomes too small, and hence the adsorption quantity of the photosensitizer sometimes becomes insufficient.

The process for preparing such porous titanium oxide fine particle aggregates is not specifically restricted provided that titanium oxide fine particle aggregates having the aforesaid mean particle diameter and pore volume are obtained using the particulate titanium oxide fine particles (1), the fibrous titanium oxide fine particles (2) and the tubular titanium oxide fine particles (3). For example, the porous titanium oxide fine particle aggregates can-be prepared in accordance with the process disclosed in Japanese Patent Laid-Open Publication No. 174103/1986 applied by the present applicant.

Specifically, the porous titanium oxide fine particle aggregates can be obtained by spray drying a dispersion of one or more kinds of titanium oxide fine particles selected from the particulate titanium oxide fine particles (1), the fibrous titanium oxide fine particles (2) and the tubular titanium oxide fine particles (3).

The spraying conditions vary depending upon the type and the size of the titanium oxide fine particles used, the concentration of the dispersion, etc., but for example, the porous titanium oxide fine particle aggregates can be obtained by performing spray drying in an air stream under the conditions of a spray drying atmosphere temperature of about 10 to 150°C, preferably 40 to 120°C, and a humidity of 3 to 13% by volume, preferably 5 to 9% by volume. By performing spray drying under such conditions, spherical porous titanium oxide fine particle aggregates are obtained, and a porous metal oxide semiconductor film which has a uniform and large thickness, which is capable of adsorbing a sufficient amount of a dye and in which electron transfer is excellent can be readily obtained.

The concentration of the titanium oxide fine particle dispersion to be sprayed is in the range of preferably 1.0 to 40% by weight, more preferably 5.0 to 20% by weight, in terms of solids content.

If the concentration of the titanium oxide fine particle dispersion is too low, it is difficult to obtain aggregates, and even if they are obtained, the mean particle diameter becomes too small, and it is difficult to achieve the object of the present invention.

If the concentration of the titanium oxide fine particle dispersion is too high, viscosity of the dispersion is high, and hence spray drying cannot be carried out occasionally.

The titanium oxide fine particle dispersion to be sprayed desirably contains finely divided particles of a gel or a-sol of orthotitanic acid, or peroxotitanic acid obtained by dissolving the gel or the sol in hydrogen peroxide, or a titania sol obtained by heat aging the peroxotitanic acid. The amount of the binder used is as described previously.

The concentration of the titanium oxide fine particle dispersion containing peroxotitanic acid or the like is in the range of 0.5 to 40% by weight, preferably 2 to 20% by weight, in terms of solids content.

The porous titanium oxide fine particle aggregates obtained by spray drying can be used as they are, but they may be calcined. Especially in the case where they contain a binder, they are preferably subjected to calcining (heat treatment). The calcining temperature is in the range of 200 to 800°C, preferably 300 to 700°C. By virtue of this calcining treatment, the binder component is crystallized into anatase type titanium oxide. If the calcining temperature is too low, binding power among the particles is low, and sufficient strength is not obtained occasionally, or crystallization of the binder component into anatase type titanium oxide becomes insufficient. Consequently, sufficient photoelectric conversion efficiency is not obtained occasionally. If the calcining temperature of the porous titanium oxide fine particle aggregates is too high, the adsorption quantity of the photosensitizer is decreased because of decrease of specific surface area, or the anatase type titanium oxide is sometimes transformed into rutile type titanium oxide. Hence, the photoelectric conversion efficiency is sometimes lowered.

The porous titanium oxide fine particle aggregates obtained as above may be further treated in order to enhance photoelectric conversion efficiency.

The amount of the titanium oxide precursor supported is in the range of 5 to 35% by weight, preferably 10 to 30% by weight, based on the weight of the porous titanium oxide fine particle aggregates.

The porous titanium oxide fine particle aggregates obtained as above are preferably treated with a titanium compound in order to enhance photoelectric conversion efficiency. Examples of the titanium compounds include titanium tetrachloride, titanium sulfate, titanyl sulfate and titanium alkoxide.

For example, the porous titanium oxide fine particle aggregates are dispersed in a titanium tetrachloride aqueous solution and then washed to obtain porous titanium oxide fine particle aggregates on the surfaces of which a finely divided titanium oxide precursor has been supported, and by the use of such porous titanium oxide fine particle aggregates, a porous metal oxide semiconductor film having excellent photoelectric conversion efficiency can be obtained.

The treating method comprises, for example, dispersing the porous titanium oxide fine particle aggregates in a titanium tetrachloride aqueous solution having a TiO₂ concentration of 0.1 to 10% by weight, preferably 0.5 to 8% by weight, then stirring the dispersion at a temperature of 20 to 95°C, preferably 30 to 85°C, and then washing the dispersion to support a finely divided titanium oxide precursor on the surfaces of the porous titanium oxide fine particle aggregates.

In this case, the finely divided titanium oxide precursor is in the form of a gel, and the size is not more than about 3 nm.

Although the washing is not specifically restricted provided that an excess titanium compound and anion can be removed, it is preferable that after washing with pure water or the like, washing with an alcohol such as ethanol or solvent substitution is carried out. By carrying out washing with an alcohol or solvent substitution finally, dispersibility of the porous titanium oxide fine particle aggregates in the porous metal oxide semiconductor film-forming coating material becomes excellent, and a porous metal oxide semiconductor film which has a uniform thickness, is free from cracks and has excellent strength and photoelectric conversion efficiency can be obtained.

The amount of the finely divided titanium oxide precursor supported is in the range of 5 to 35% by weight, preferably 10 to 30% by weight, in terms of TiO₂, based on the porous titanium oxide fine particle aggregates. When such a finely divided titanium oxide precursor is supported, photoelectric conversion efficiency tends to be enhanced though the reason is not necessarily clear.

If the amount of the finely divided titanium oxide precursor supported is too small, the effect of enhancingphotoelectric conversion efficiency becomes insufficient. Even if the amount thereof is too large, anatase crystallizability of the porous metal oxide semiconductor film is lowered, or the specific surface area is decreased. Consequently, the photoelectric conversion efficiency is sometimes lowered.

### Unaggregated titanium oxide fine particles

The coating material for forming a porous metal oxide semiconductor film for photovoltaic cell according to the invention contains unaggregated titanium oxide fine particles together with the porous titanium oxide fine particle aggregates.

As the titanium oxide fine particles, the same titanium oxide fine particles as the aforesaid particulate titanium oxide fine particles (1) are employable. These titanium oxide fine particles are unaggregated particles. The "unaggregated particles are particles which do not form aggregates and are present as individual particles or groups of plural particles, differently from the porous titanium oxide fine particle aggregates.

The aforesaid unaggregated particulate titanium oxide fine particles have a mean particle diameter of 5 to 400 nm, but the mean particle diameter of the titanium oxide fine particles used herein is in the range of 5 to 40 nm, preferably 10 to 30 nm.

It is difficult to obtain titanium oxide fine particles having a mean particle diameter of less than the lower limit of the above range, and even if they are obtained, their crystallizability is low. Moreover, when a semiconductor film is heat treated after application of the porous metal oxide semiconductor film-forming coating material, the semiconductor film is sintered depending upon the temperature to thereby decrease the specific surface area of the titanium oxide fine particles. Therefore, the adsorption quantity of the photosensitizer is decreased, and consequently the photoelectric conversion efficiency sometimes becomes insufficient. If the mean particle diameter of the titanium oxide fine particles exceeds 40 nm, strength of the porous metal oxide semiconductor film becomes insufficient, or the adsorption quantity of the photosensitizer is decreased. Consequently, the photoelectric conversion efficiency sometimes becomes insufficient.

The titanium oxide fine particles are also preferably particles of anatase type titanium oxide.

### Dispersion medium

As the dispersion medium of the coating material, one or more media selected from water, alcohols, ketones, glycols, ethers and turpentines are employed.

Examples of the alcohols include methanol, ethanol, isopropyl alcohol and butanol. Examples of the ketones include acetone. Examples of the glycols include ethylene glycol and propylene glycol. Examples of the ethers include butyl carbitol and butyl carbitol acetate. Examples of the turpentines include terpineol, dihydroterpineol and terpinolene.

In a screen printing method, a coating material in which the fine particles, etc. are dispersed in a solvent, such as terpineol or butyl carbitol, is preferably used. In a printing method requiring quick drying, aqueous dispersion media containing water and alcohols having a relatively low-boiling point, such as methanol, ethanol, isopropyl alcohol and butanol, can be preferably used because such dispersion media can homogeneously disperse or dissolve the titanium oxide particles and the below-described thickener that is used when necessary, and besides, when a titanium oxide particle layer comprising the porous titanium oxide fine particle aggregates and the titanium oxide fine particles is dried after it is formed on a base, such dispersion media are readily evaporated.

### Thickener

In the coating material of the invention, a thickener may be contained, and examples of the thickeners include polyethylene glycol, polyvinylpyrrolidone, hydroxypropyl cellulose, polyacrylic acid, ethyl cellulose, methyl cellulose, carboxymethyl methyl cellulose, polyvinyl alcohol, acrylic resin, ketone resin and melamine resin. When such a thickener is contained in the porous metal oxide semiconductor film-forming coating material, viscosity of the coating material is increased, and thereby the coating material can be applied more uniformly.

The concentration of the thickener in the porous metal oxide semiconductor film-forming coating material is usually not more than 40% by weight, preferably 1.0 to 40.0% by weight, more preferably 4.0 to 10.0% by weight, though it varies depending upon the type of the thickener.

If the concentration of the thickener is too high, not only the coating property is lowered but also the strength of the resulting semiconductor film becomes insufficient. Moreover, it becomes difficult to remove the thickener completely, so that the effect of sufficiently enhancing the photoelectric conversion efficiency is not obtained occasionally.

The total concentration of the porous titanium oxide fine particle aggregates and the unaggregated titanium oxide fine particles in the porous metal oxide semiconductor film-forming coating material is in the range of 1 to 30% by weight, preferably 2 to 20% by weight, in terms of titanium oxide. If the concentration of the fine particles is too low, a porous metal oxide semiconductor film of a desired thickness cannot be occasionally formed with a small number of coating times, and repeated operations become necessary. If the concentration is too high, viscosity of the dispersion is increased, and the denseness of the resulting metal oxide semiconductor film is lowered. Therefore, the strength and the abrasion resistance of the semiconductor film sometimes become insufficient.

In the porous metal oxide semiconductor film-forming coating material, the porous titanium oxide fine particle aggregates and the titanium oxide fine particles are preferably used so that the content of the porous titanium oxide fine particle aggregates in the resulting porous metal oxide semiconductor film will become 30 to 70% by weight, preferably 35 to 50% by weight, in terms of solids content (TiO₂) and the content of the unaggregated titanium oxide fine particles in the resulting porous metal oxide semiconductor film will become 30 to 70% by weight, preferably 50 to 65% by weight, in terms of solids content (TiO₂). If the content of the porous titanium oxide fine particle aggregates in the porous metal oxide semiconductor film is less than 30% by weight in terms of solids content (TiO₂), a porous metal oxide semiconductor film of a desired thickness cannot be occasionally formed with a small number of coating times, and repeated operations become necessary.

If the content of the porous titanium oxide fine particle aggregates in the porous metal oxide semiconductor film exceeds 70% by weight in terms of solids content (TiO₂), the amount of the titanium oxide fine particles that are used together with the porous titanium oxide fine particle aggregates is too small, and therefore, the strength of the porous semiconductor film sometimes becomes insufficient or the photoelectric conversion efficiency sometimes becomes insufficient.

The quantity ratio (ratio by weight, porous:unaggregated) between the porous titanium oxide fine particle aggregates and the unaggregated titanium oxide fine particles in the porous metal oxide semiconductor film-forming coating material is in the range of 30:70 to 70:30, preferably 35:65 to 50:50, in terms of TiO₂.

The total solids concentration (total concentration of the porous titanium oxide fine particle aggregates and the unaggregated titanium oxide fine particles) of the porous metal oxide semiconductor film-forming coating material is desired to be in the range of 1 to 30% by weight, preferably 2 to 25% by weight. If the total solids concentration is too low, a porous metal oxide semiconductor film having a uniform and large thickness cannot be occasionally formed with a small number of coating times. If the total solids concentration is too high, coating property is lowered, and hence a film of uniform and large thickness cannot be formed occasionally.

In the porous metal oxide semiconductor film-forming coating material, peroxotitanic acid may be contained. When peroxotitanic acid is contained, a porous metal oxide semiconductor film which is dense and is excellent not only in strength but also in electron transfer property is obtained. Moreover, the adsorption quantity of the photosensitizer is increased, and as a result, the photoelectric conversion efficiency is sometimes enhanced. The amount of peroxotitanic acid used in the coatingmaterial is desired to be in the range of usually not more than 30% by weight, preferably 1 to 30% by weight, more preferably 2 to 15% by weight, based on the total amount of the porous titanium oxide fine particle aggregates and the unaggregated titanium oxide fine particles.

If the amount of peroxotitanic acid used is too small, the effect of enhancing adhesion to a titanium oxide thin film (1) that is provided when necessary and the effect of enhancing strength of the semiconductor film sometimes become insufficient. Moreover, the effect of increasing the adsorption quantity of the photosensitizer and the effect of enhancing the photoelectric conversion efficiency sometimes become insufficient. Even if the amount of peroxotitanic acid is increased to more than the upper limit of the above range, the above effects are not further raised, and the photoelectric conversion efficiency is sometimes lowered.

Such a porous metal oxide semiconductor film-forming coating material is applied onto an electrode layer or a titanium oxide thin film that is provided when necessary, then dried and thereafter cured by irradiation with ultraviolet rays or cured and annealed by heating, whereby a semiconductor film can be formed.

As the coating method, dipping method, spinner method, roll coater method, flexographic printing method, screen printing method or the like is preferable.

The drying temperature has only to be a temperature at which a dispersion medium can be removed, and for the drying, a hitherto publicly known method is adoptable. Air-drying is also possible, but in usual, drying is carried out at a temperature of 50 to 200°C for 2 to 5 hours. Although the ultraviolet irradiation dose varies depending upon the content of peroxotitanic acid, etc., the film has only to be irradiated in doses necessary for decomposition of the peroxotitanic acid and curing of the film. The heat treatment is carried out at a temperature of usually 200 to 600°C, preferably 300 to 500°C, for about 1 to 48 hours.

The film thickness of the porous metal oxide semiconductor film obtained as above is in the range of 0.5 to 50 µm, preferably 1 to 40 µm.

### Photovoltaic cell

The photovoltaic cell according to the invention is a photovoltaic cell comprising:
a first substrate having an electrode layer (1) on its surface and having a porous metal oxide semiconductor film which has adsorbed a photosensitizer and is formed on the surface of the electrode layer (1),
a second substrate having an electrode layer (2) on its surface,
said first substrate and said second substrate being arranged in such a manner that the electrode layer (1) and the electrode layer (3) face each other, and
an electrolyte layer which is provided between the porous metal oxide semiconductor film and the electrode layer (3),
wherein the porous metal oxide semiconductor film comprises the porous titanium oxide fine particle aggregates and the unaggregated titanium oxide fine particles.

The photovoltaic cell obtained by the invention is, for example, a photovoltaic cell shown in Fig. 1.

Fig. 1 is a schematic sectional view showing an example of the photovoltaic cell obtained by the invention. In this photovoltaic cell, a first substrate (5) having an electrode layer (1) on its surface, having a titanium oxide thin film on the electrode layer (1) and having a porous metal oxide semiconductor film (2) which has adsorbed a photosensitizer and is formed on the titanium oxide thin film and a second substrate having an electrode layer (3) on its surface are arranged in such a manner that the electrode layer (1) and the electrode layer (3) face each other, and an electrolyte is enclosed between the porous metal oxide semiconductor film (2) and the electrode layer (3). The titanium oxide thin film may be formed or may not be formed.

In Fig. 1, numeral 1 designates an electrode layer (1), numeral 2 designates a semiconductor film , numeral 3 designates an electrode layer (3), numeral 4 designates an electrolyte layer (4), numeral 5 designates a first substrate, numeral 6 designates a second substrate, and numeral 7 designates a titanium oxide thin film.

The photovoltaic cell obtained by the invention is not limited to the photovoltaic cell shown in the figure, and may be a photovoltaic cell having two or more semiconductor films and having a different electrode layer and a different electrolyte layer which are provided between the semiconductor films.

### Substrate

As one of the substrates, a substrate having transparency and insulation property, such as an organic polymer substrate, specifically a PET substrate, is employable.

The other substrate is not specifically restricted provided that it has such a strength as fits the substrate for use, and as this substrate, not only an insulating substrate, such as an organic polymer substrate, specifically a PET substrate, but also a conductive substrate, such as a substrate of metallic titanium, metallic aluminum, metallic copper or metallic nickel, is employable.

At least one of the substrates has only to be transparent.

### Electrode layer

As the electrode layer (1) formed on the surface of the first substrate, a hitherto known electrode, such as an electrode of tin oxide, tin oxide doped with Sb, F or P, indium oxide doped with Sn and/or F, antimony oxide, zinc oxide or noble metal, is employable.

Such an electrode layer (1) can be formed by a hitherto publicly known method, such as thermal decomposition method or CVD method.

The electrode layer (3) formed on the surface of the other substrate is not specifically restricted provided that it has an ability of a reduction catalyst, and there can be used hitherto publicly known electrodes, for example, electrodes made of electrode materials, such as platinum, rhodium, ruthenium metal and ruthenium oxide, electrodes obtained by plating or depositing the electrode materials on the surfaces of conductive materials, such as tin oxide, tin oxide doped with Sb, F or P, indium oxide doped with Sn and/or F, and antimony oxide, and carbon electrode.

Such an electrode layer (3) can be formed by a hitherto known method, such as a method in which the above electrode is directly formed on the second substrate by coating, plating or deposition. The electrode layer (3) can be formed by a method in which a conductive layer is formed from the conductive material by a hitherto publicly known method such as thermal decomposition method or CVD method and the electrode material may be plated or deposited on the conductive layer.

The second substrate maybe a transparent substrate similarly to the first substrate, and the electrode layer (3) may be a transparent electrode similarly to the electrode layer (1). Further, the second substrate may be the same as the first substrate and the electrode layer (3) may be the same as the electrode layer (1).

The visible light transmittance of the transparent first substrate and the transparent electrode layer (1) is preferably higher, and specifically, it is preferably not less than 50%, particularly preferably not less than 90%. If the visible light transmittance is less than 50%, the photoelectric conversion efficiency is sometimes lowered.

The resistance value of the electrode layer (1) and the resistance value of the electrode layer (3) are each preferably not more than 100 Ω/cm². If the resistance value of the electrode layer is too high, the photoelectric conversion efficiency is sometimes lowered.

### Titanium oxide thin film

In the present invention, a titanium oxide thin film (7) may be formed on the electrode layer (1) when necessary. This titanium oxide thin film is formed by the use of a peroxotitanic acid aqueous solution containing a thickener, and is a dense film. By forming the titanium oxide thin film, the energy barrier can be lowered, and the electron transfer can be inhibited. As a result, the photoelectric conversion efficiency can be enhanced.

The titanium oxide thin film has a film thickness of 10 to 70 nm, preferably 20 to 40 nm. If the film thickness of the titanium oxide thin film is too small, inhibition of dark current due to the titanium oxide thin film and inhibition of recombination of electrons become insufficient. If the film thickness of the titanium oxide thin film is too large, the energy barrier becomes so high that the electron transfer is inhibited, and the photoelectric conversion efficiency is sometimes lowered.

The pore volume of the titanium oxide thin film is in the range of 0.01 to 0.20 ml/g, preferably 0.02 to 0.15 ml/g. If the pore volume is more than the upper limit of the above range, denseness is lowered, and contact of the electrolyte with the electrode occurs. Accordingly, the effects of inhibiting backflow of electrons and inhibiting recombination of electrons sometimes become insufficient. It is possible to obtain a dense titanium oxide thin film by sputtering or the like, but the resulting film is so dense that the electron transfer is inhibited, or the adhesion to the porous metal oxide semiconductor film that is formed later sometimes becomes insufficient.

The mean pore diameter of the titanium oxide thin film is in the range of 0.5 to 5.0 nm, preferably 1.0 to 3.5 nm. If the mean pore diameter of the titanium oxide thin film is more than the upper limit of the above range, contact of the electrolyte with the electrode occurs, and the effects of inhibiting backflow of electrons and inhibiting recombination of electrons sometimes become insufficient.

The titanium oxide thin film can be formed by coating the electrode layer (1) with a peroxotitanic acid aqueous solution containing a thickener by one or more methods selected from (A) spin coating method, (B) dip coating method, (C) flexographic printingmethod, (D) rollcoatermethodand (E) electrophoresismethod, then drying the coating film and curing it.

The concentration of the peroxotitanic acid aqueous solution used for forming the titanium oxide thin film is in the range of 0.1 to 2.0% by weight, preferably 0.3 to 1.0% by weight, in terms of TiO₂. If the concentration of the peroxotitanic acid aqueous solution is too low, a titanium oxide thin film having a desired thickness cannot be obtained occasionally, and repeated coating and drying operations become necessary. If the concentration of the peroxotitanic acid aqueous solution is too high, cracks sometimes occur during drying, or a dense film cannot be obtained occasionally. Accordingly, the effects of inhibiting dark current and inhibiting recombination of electrons cannot be obtained occasionally.

The "peroxotitanic acid" used herein means hydrated titaniumperoxide, and can be prepared by, for example, adding hydrogen peroxide to an aqueous solution of a titanium compound or a sol or a gel of hydrated titanium oxide and heating the mixture. More specifically, a titanium compound is hydrolyzed first to prepare a sol of a gel of orthotitanic acid.

The gel of orthotitanic acid can be obtained by using, as a titanium compound, a titanium salt, such as titanium chloride, titanium sulfate or titanyl sulfate, adding an alkali to an aqueous solution of the titanium salt to neutralize the solution and washing the solution. The sol of orthotitanic acid can be obtained by passing an aqueous solution of the titanium salt through an ion-exchange resin to remove anions or by adding an acid or an alkali to a solution of a titanium alkoxide, such as titanium tetramethoxide, titanium tetraethoxide or titanium tetraisopropoxide, in water and/or an organic solvent to perform hydrolysis.

In the neutralization or the hydrolysis, pH of the solution of the titanium compound is preferably in the range of 7 to 13. When pH of the titanium compound solution is in the above range, fine particles of a sol or a gel of orthotitanic acid are obtained, and the later-described reaction with hydrogen peroxide is readily carried out.

The temperature in the neutralization or the hydrolysis is in the range of preferably 0 to 60°C, particularly preferably 0 to 50°C. When the temperature in the neutralization or the hydrolysis is in the above range, fine particles of a sol or a gel of orthotitanic acid are obtained, and the later-described reaction with hydrogen peroxide is readily carried out. The orthotitanic acid particles in the resulting sol or gel are preferably non-crystalline.

Next, hydrogen peroxide is added to the gel or the sol of orthotitanic acid or a mixture of the gel and the sol to dissolve the orthotitanic acid, whereby a peroxotitanic acid aqueous solution is prepared.

In the preparation of the peroxotitanic acid aqueous solution, the gel or the sol of orthotitanic acid or a mixture of the gel and the sol is preferably heated to not lower than about 50 °C or is preferably stirred, when needed. In this case, if the concentration of the orthotitanic acid becomes too high, dissolution of the orthotitanic acid needs a long time, and besides, an undissolved gel is sometimes precipitated, or the resulting peroxotitanic acid aqueous solution sometimes becomes viscous. Therefore, the concentration of the orthotitanic acid is preferably not more than about 10% by weight, more preferably not more than about 5% by weight, in terms of TiO₂.

With regard to the amount of hydrogen peroxide added, the H₂O₂/TiO₂ (orthotitanic acid: in terms of TiO₂) weight ratio is not less than 1, and in this case, the orthotitanic acid can be completely dissolved. If the H₂O₂/TiO₂ weight ratio is less than 1, the orthotitanic acid cannot be completely dissolved, and an unreacted gel or sol sometimes remains. As the H₂O₂/TiO₂ weight ratio is increased, the rate of dissolving the orthotitanic acid becomes higher, and the reaction is completed in a shorter period of time. However, even if hydrogen peroxide is used in excess, unreacted hydrogen peroxide merely remains in the system, resulting in poor economy. When the hydrogen peroxide is used in such an amount as above, the orthotitanic acid is dissolved in about 0.5 to 20 hours. After the dissolution, the peroxotitanic acid aqueous solution for use in the invention is preferably aged at 50 to 90°C. By carrying out this aging, particles which exhibit an X-ray diffraction pattern analogous to that of anatase in spite of substantially non-crystalline particles and have a mean particle diameter of 10 to 50 nm are formed, and a titanium oxide thin film having the aforesaid pore volume and mean pore diameter can be obtained with excellent reproducibility.

The aging time is in the range of usually 1 to 25 hours though it varies depending upon the aging temperature.

The peroxotitanic acid aqueous solution for use in the invention contains a thickener. As the thickener,ethylene glycol,polyethylene glycol, polyvinylpyrrolidone, hydroxypropyl cellulose, polyacrylic acid, ethyl cellulose, polyvinyl alcohol, methanol, ethanol, isopropyl alcohol, normal butanol, tertiary butanol or the like may be contained. When such a thickener is contained in the peroxotitanic acid aqueous solution, viscosity of the coating solution is increased, and thereby the coating solution can be applied more uniformly. Therefore, a titanium oxide thin film having a uniform thickness is obtained, and a titanium oxide thin film having high adhesion to the electrode layer that is an upper layer and to the porous metal oxide semiconductor layer that is a lower layer can be obtained.

The concentration of the thickener in the peroxotitanic acid aqueous solution is in the range of 1.0 to 60.0% byweight, preferably 3.0 to 35.0% by weight, though it varies depending upon the type of the thickener. If the concentration of the thickener is less than 1.0% by weight, the effect of using the thickener is insufficient. If the concentration of the thickener exceeds 60.0% by weight, the coating property is lowered, and hence the film thickness sometimes becomes too large or cracks sometimes occur. Accordingly, the effect of providing the titanium oxide thin film is not obtained occasionally.

When the peroxotitanic acid aqueous solution is applied by any one of (A) spin coating method, (B) dip coating method, (C) flexographic printing method, (D) roll coater method and (E) electrophoresis method, a titanium oxide thin film (1) which has excellent adhesion to the electrode layer, has a uniform thickness, is free from cracks and has excellent strength can be formed. In particular, the flexographic printing method can be preferably adopted industrially.

The drying temperature has only to be a temperature at which water that is a dispersion medium can be removed, and for the drying, a hitherto publicly known method is adoptable. Air-drying is also possible, but in usual, drying is carried out at a temperature of 50 to 200°C for 2 to 5 hours. In the present invention, after the coating film is dried, the later-described porous metal oxide semiconductor film can be formed, but after the coating film is dried and then cured, the porous metal oxide semiconductor filmmaybe formed.

The coating film is cured by the drying treatment only, but if necessary, the coating film is irradiated with ultraviolet rays. Then, the film may be subjected to heat treatment to perform annealing.

Irradiation with ultraviolet rays has only to be carried out in doses necessary for decomposition of the peroxotitanic acid and curing of the film. The heat treatment is carried out at a temperature of usually 200 to 500°C, preferably 300 to 450°C, for about 1 to 48 hours.

### Porous metal oxide semiconductor film

On the electrode layer (1) or on the titanium oxide thin film (7) that is provided when necessary, a porous metal oxide semiconductor film is formed. The film thickness of the porous metal oxide semiconductor film is preferably in the range of 0.1 to 50 µm.

The porous metal oxide semiconductor film is composed of the porous titanium oxide fine particle aggregates, the unaggregated titanium oxide fine particles, and titanium oxide derived from peroxotitanic acid that is used when necessary.

The pore volume of the porous metal oxide semiconductor film according to the invention is in the range of 0.10 to 0.80 ml/g, preferably 0.20 to 0.65 ml/g. If the pore volume of the porous metal oxide semiconductor film is too small, the adsorption of the photosensitizer becomes insufficient, or the diffusion property of the electrolyte is lowered to sometimes bring about back current, and hence the conversion efficiency sometimes becomes insufficient. If the pore volume is too large, strength of the porous metal oxide semiconductor film sometimes becomes insufficient.

### Photosensitizer

In the photovoltaic cell according to the invention, a photosensitizer is adsorbed on the porous metal-oxide semiconductor film (1).

The photosensitizer is not specifically restricted provided that it absorbs light of visible region, ultraviolet region or infrared region and thereby is excited. For example, organic dyes and metallic complexes are employable.

As the organic dyes, hitherto publicly known organic dyes having a functional group, such as carboxyl group, hydroxyalkyl group, hydroxyl group, sulfone group or carboxyalkyl group, in a molecule are employable. Examples of the organic dyes include metal-free phthalocyanine, cyanine dyes, metallocyanine dyes, triphenylmethane dyes, and xanthene dyes, such as uranin, eosin, rose bengal, rhodamine B and dibromofluoresein. These organic dyes have properties that the rate of adsorption on the metal oxide semiconductor film is high.

Examples of the metallic complexes include metallic phthalocyanines, such as copper-phthalocyanine and titanyl phthalocyanine, and complexes of ruthenium, osmium, iron and zinc, specifically, chlorophyll, hemin, ruthenium-tris(2,2'-bispyridyl-4,4'-dicarboxylate), cis(SCN⁻)-bis(2,2'-bipyridyl-4,4'-dicarboxylate)ruthenium, ruthenium-cis-diaqua-dipyridyl complexes such as ruthenium-cis-diaqua-bis(2,2'-bipyridyl-4,4'-dicarboxylate), porphyrins such as zinc-tetra(4-carboxyphenyl)porphyrin, and iron-hexacyanide complex, which are described in Japanese Patent Laid-Open Publication No. 220380/1989, National Publication of International Patent No. 504023/1993, etc. These metallic complexes are excellent in spectral sensitization effect and durability.

As the photosensitizers, the above organic dyes or the above metallic complexes may be used singly, or the organic dyes or the metallic complexes may be used as a mixture of two or more kinds, or the organic dyes and the metallic complexes may be used in combination.

The adsorption quantity of the photosensitizer on the porous metal oxide semiconductor film is not less than 100 µg, more preferably not less than 150 µg, based on 1 cm² of the specific surface area of the porous metal oxide semiconductor film.

If the adsorption quantity of the photosensitizer on the porous metal oxide semiconductor film is too little, the photoelectric conversion efficiency becomes insufficient.

The method for adsorbing the photosensitizer is not specifically restricted, and a general method such as a method in which the porous metal oxide semiconductor film is allowed to absorb a solution obtained by dissolving the photosensitizer in a solvent, by dipping method, spinner method, spraying method or the like and then dried is adoptable. The above absorption step may be repeated when necessary. It is also possible that the photosensitizer solution is brought into contact with the substrate with heating under reflux to allow the porous metal oxide semiconductor film to adsorb the photosensitizer.

As the solvent to dissolve the photosensitizer, any solvent is available provided that it dissolves the photosesitizer. Examples of such solvents include water, alcohols, toluene, dimethylformamide, chloroform, ethyl cellossolve, N-methylpyrrolidone and tetrahydrofuran.

The concentration of the photosensitizer in the photosensitizer solution is preferably such a concentration that the amount of the photosensitizer becomes not less than 100 µg, preferably not less than 200 µg, based on 1 cm² of the specific surface area of the porous metal oxide semiconductor film.

In the present invention, the photovoltaic cell can be produced by arranging the first substrate having the electrode layer (1) on its surface, having the titanium oxide thin film on the electrode layer (1) and having the porous metal oxide semiconductor film which has adsorbed a photosensitizer and is formed on the titanium oxide thin film and the second substrate having the electrode layer (3) on its surface in such a manner that the electrode layer (1) and the electrode layer (3) face each other, then sealing the sides with a resin, enclosing an electrolyte between the porous metal oxide semiconductor film and the electrode layer (3) and connecting the electrodes to each other with a lead wire.

### Electrolyte layer

As the electrolyte, a mixture of an electrochemically active salt and at least one compound that forms oxidation-reduction system together with the salt is utilized.

Examples of the electrochemically active salts include quaternary ammonium salts, such as tetrapropylamonium iodide. Examples of the compounds that form oxidation-reduction system include quinone, hydroquinone, iodine (I⁻/I⁻₃), potassium iodide, bromine (Br⁻/Br⁻₃) and potassium bromide. In some cases, they can be used after they are mixed.

The amount of the electrolyte used is preferably in the range of about 0.1 to 5 mol/liter though it varies depending upon the type of the electrolyte and the type of the below-described solvent.

For the electrolyte layer, a hitherto publicly known solvent is employable. Examples of the solvents include water, alcohols, oligo ethers, carbonates such as propion carbonate, phosphoric esters, dimethylformamide, dimethyl sulfoxide, N-methylpyrrolidone, N-vinylpyrrolidone, sulfur compounds such as sulforan 66, ethylene carbonate, acetonitrile and γ-butyrolactone.

### EXAMPLES

The present invention is further described with reference to the following examples, but it should be construed that the invention is in no way limited to those examples.

### Example 1

### Preparation of porous titanium oxide fine particle aggregates (1)

500 g of a titanium oxide sol (available from Catalysts & Chemicals Industries Co., Ltd., HPW-18NR, mean particle diameter: 20 nm, TiO₂ concentration: 20% by weight) and 250 g of a peroxotitanic acid aqueous solution having a concentration of 4.0% by weight in terms of TiO₂ were mixed, and to the mixture was added water to dilute the mixture, whereby a titanium oxide fine particle dispersion having a TiO₂ concentration of 8% by weight was prepared. Then, the dispersion was fed to an opposed two-fluid nozzle and subjected to spray drying under the conditions of a throughput of 60 l/hr, an air/liquid ratio of 2000, an air flow velocity of Mach 1.1, a drying atmosphere temperature of 120°C and a humidity of 7.2% by volume.

The resulting particles were calcined at 550°C for 3 hours to prepare porous titanium oxide fine particle aggregates (1).

Mean particle diameter and pore volume of the porous titanium oxide fine particle aggregates (1) were measured, and the results are set forth in the table.

### Preparation of porous metal oxide semiconductor film-forming coating material (1)

20 g of the porous titanium oxide fine particle aggregates (1) were mixed with 120 g of a titanium oxide sol (available from Catalysts & Chemicals Industries Co., Ltd., HPW-18NR, mean particle diameter: 20 nm, TiO₂ concentration: 20% by weight). To 100 g of the resulting dispersion, a solution obtained by dissolving 14 g of ethyl cellulose as a semiconductor film-forming assistant in ethanol so that the concentration would become 10% was added, and they were sufficiently mixed. Thereafter, to the mixture was added 94 g of terpineol as a solvent for screen printing, and they were sufficiently mixed. The resulting solution was concentrated by a rotary evaporator so that the TiO₂ concentration would become 25% by weight, whereby a porous metal oxide semiconductor film-forming coating material (1) was prepared.

### Preparation of peroxotitanic acid coating solution

18.3 g of titanium tetrachloride was diluted with pure water to obtain an aqueous solution containing titanium tetrachloride in an amount of 1.0% by weight in terms of TiO₂. With stirring the aqueous solution, aqueous ammonia having a concentration of 15% by weight was added to the aqueous solution to obtain a white slurry having pH of 9.5. This slurry was subjected to filtration washing to obtain a cake of a hydrated titanium oxide gel having a concentration of 10.2% by weight in terms of TiO₂. This cake was mixed with 400 g of aqueous hydrogen peroxide having a concentration of 5%, and then they were heated at 80°C for 2 hours to dissolve the cake, whereby a peroxotitanic acid aqueous solution (1) having a concentration of 1.0% by weight in terms of TiO₂ was obtained. Further, to the peroxotitanic acid aqueous solution were added water and ethylene glycol so that the TiO₂ concentration would become 0. 5% and the ethylene glycol concentration would become 20%, whereby a peroxotitanic acid coating solution was obtained.

### Formation of titanium oxide thin film (1)

A transparent glass substrate on which an electrode of fluorine-doped tin oxide had been formed was coated with the peroxotitanic acid coating solution (1) by flexographic printing, followed by air-drying. Subsequently, the coating film was irradiated with ultraviolet rays at 6000 mJ/cm² by the use of a low-pressure mercury lamp to decompose peroxo acid and to cure the film. Further, the film was heated at 450°C for 30 minutes to perform curing and annealing, whereby a titanium oxide thin film (1) was formed.

The resulting titanium oxide thin film (1) had a film thickness of 40 nm, a pore volume, as determined by nitrogen adsorption method, of 0.12 ml/g and a mean pore diameter of 2 nm.

### Formation of porous metal oxide semiconductor film (1)

Screen printing of the porous metal oxide semiconductor film-forming coating material (1) on the transparent glass substrate on which the titanium oxide thin film (1) had been formed and drying were repeated 5 times until the film thickness became 12 µm. Thereafter, the resulting film was subjected to calcining/annealing at 450°C to form a porous metal oxide semiconductor film (1).

Film thickness of the resulting porous metal oxide semiconductor film (1), pore volume thereof as determined by nitrogen adsorption method, and mean pore diameter thereof are set forth in the table. Further, adhesion of the porous metal oxide semiconductor film (1) was evaluated, and the result is set forth in Table 1.

### Adsorption of photosensitizer

As a photosensitizer, B2 dye available from DYESOL Co. was dissolved in ethanol so that the concentration would become 0.1% by weight, to prepare an ethanol solutio. The glass on which the porous metal oxide semiconductor film (1) had been formed was immersed in this solution for 5 hours, then taken out and washed with an ethanol aqueous solution to allow the semiconductor film to adsorb the dye.

### Preparation of photovoltaic cell (1)

First, in a mixed solvent of acetonitrile and ethylene carbonate in a volume ratio of 1: 4, tetrapropylammonium iodide and iodine were dissolved so that the concentrations of tetrapropylammonium iodide and iodine would become 0.46 mol/l and 0.06 mol/l, respectively, to prepare an electrolyte solution.

The electrode prepared above was used as one electrode. As the other electrode, an electrode of fluorine-doped tin oxide was formed, and on this electrode, a transparent glass substrate on which platinum had been supported was arranged in such a manner that the electrodes faced each other, followed by sealing the sides with a resin. Then, the electrolyte solution was enclosed between the electrodes, and the electrodes were connected to each other with a lead wire to prepare a photovoltaic cell (1).

The photovoltaic cell (1) was irradiated with light having an intensity of 100 W/m² at an angle of incidence of 90° (90° to the cell surface) by means of a solar simulator to measure Voc (voltage in a state of open circuit), Joc (density of current flowing at the time of short-circuiting), FF (curve factor) and η (conversion efficiency). The results are set forth in Table 1.

### Example 2

### Preparation of porous titanium oxide fine particle aggregates (2)

500 g of a titanium oxide sol (available from Catalysts & Chemicals Industries Co., Ltd., HPW-18NR, mean particle diameter: 20 nm, TiO₂ concentration: 20% by weight) and 500 g of a peroxotitanic acid aqueous solution having a concentration of 4% by weight in terms of TiO₂ were mixed, and to the mixture was added water to dilute the mixture, whereby a titanium oxide fine particle dispersion having a TiO₂ concentration of 8% by weight was prepared. Then, the dispersion was fed to an opposed two-fluid nozzle and subjected to spray drying under the conditions of a throughput of 60 l/hr, an air/liquid ratio of 2000, an air flow velocity of Mach 1.1, a drying atmosphere temperature of 120°C and a humidity of 7.2% by volume.

The resulting particles were calcined at 550°C for 3 hours to prepare porous titanium oxide fine particle aggregates (2).

Mean particle diameter and pore volume of the porous titanium oxide fine particle aggregates (2) were measured, and the results are set forth in the table.

### Preparation of porous metal oxide semiconductor film-forming coating material (2)

A porous metal oxide semiconductor film-forming coating material (2) was prepared in the same manner as in Example 1, except that the porous titanium oxide fine particle aggregates (2) were used.

### Formation of porous metal oxide semiconductor film (2)

A porous metal oxide semiconductor film (2) was formed in the same manner as in Example 1, except that the porous metal oxide semiconductor film-forming coating material (2) was used.

Film thickness, pore volume, mean pore diameter of the resulting porous metal oxide semiconductor film (2) were evaluated, and the results are set forth in Table 1.

### Adsorption of photosensitizer

A dye was adsorbed in the same manner as in Example 1, except that the glass on which the porous metal oxide semiconductor film (2) had been formed was used.

### Preparation of photovoltaic cell (2)

A photovoltaic cell (2) was prepared in the same manner as in Example 1, except that the porous metal oxide semiconductor film (2) on which the dye had been adsorbed was used.

Voc, Joc, FF and η of the photovoltaic cell (2) were measured, and the results are set forth in Table 1.

### Example 3

### Preparation of porous titanium oxide fine particle aggregates (3)

500 g of a titanium oxide sol (available from Catalysts & Chemicals Industries Co., Ltd., HPW-18NR, mean particle diameter: 20 nm, TiO₂ concentration: 20% by weight) and 125 g of a peroxotitanic acid aqueous solution having a concentration of 4% by weight in terms of TiO₂ were mixed, and to the mixture was added water to dilute the mixture, whereby a titanium oxide fine particle dispersion having a TiO₂ concentration of 8% by weight was prepared. Then, the dispersion was fed to an opposed two-fluid nozzle and subjected to spray drying under the conditions of a throughput of 60 l/hr, an air/liquid ratio of 2000, an air flow velocity of Mach 1.1, a drying atmosphere temperature of 120°C and a humidity of 7.2% by volume.

The resulting particles were calcined at 550°C for 3 hours to prepare porous titanium oxide fine particle aggregates (3).

Mean particle diameter and pore volume of the porous titanium oxide fine particle aggregates (3) were measured, and the results are set forth in the table.

### Preparation of porous metal oxide semiconductor film-forming coating material (3)

A porous metal oxide semiconductor film-forming coating material (3) was prepared in the same manner as in Example 1, except that the porous titanium oxide fine particle aggregates (3) were used.

### Formation of porous metal oxide semiconductor film (3)

A porous metal oxide semiconductor film (3) was formed in the same manner as in Example 1, except that the porous metal oxide semiconductor film-forming coating material (3) was used.

Film thickness, pore volume, mean pore diameter of the resulting porous metal oxide semiconductor film (3) were evaluated, and the results are set forth in Table 1.

### Adsorption of photosensitizer

A dye was adsorbed in the same manner as in Example 1, except that the glass on which the porous metal oxide semiconductor film (3) had been formed was used.

### Preparation of photovoltaic cell (3)

A photovoltaic cell (3) was prepared in the same manner as in Example 1, except that the porous metal oxide semiconductor film (3) on which the dye had been adsorbed was used.

Voc, Joc, FF and n of the photovoltaic cell (3) were measured, and the results are set forth in Table 1.

### Example 4

### Preparation of porous metal oxide semiconductor film-forming coating material (4)

20 g of the porous titanium oxide fine particle aggregates (1) were mixed with 185 g of a titanium oxide sol (available from Catalysts & Chemicals Industries Co., Ltd., HPW-18NR, mean particle diameter: 20 nm, TiO₂ concentration: 20% by weight). To 100 g of the resulting dispersion, a solution obtained by dissolving 11 g of ethyl cellulose as a semiconductor film-forming assistant in ethanol so that the concentration would become 10% was added, and they were sufficiently mixed. Thereafter, to the mixture was added 73 g of terpineol as a solvent for screen printing, and they were sufficiently mixed. The resulting solution was concentrated by a rotary evaporator so that the TiO₂ concentration would become 25% by weight, whereby a porous metal oxide semiconductor film-forming coating material (4) was prepared.

### Formation of porous metal oxide semiconductor film (4)

A porous metal oxide semiconductor film (4) was formed in the same manner as in Example 1, except that the porous metal oxide semiconductor film-forming coating material (4) was used.

Film thickness, pore volume, mean pore diameter of the resulting porous metal oxide semiconductor film (4) were evaluated, and the results are set forth in Table 1.

### Adsorption of photosensitizer

A dye was adsorbed in the same manner as in Example 1, except that the glass on which the porous metal oxide semiconductor film (4) had been formed was used.

### Preparation of photovoltaic cell (4)

A photovoltaic cell (4) was prepared in the same manner as in Example 1, except that the porous metal oxide semiconductor film (4) on which the dye had been adsorbed was used.

Voc, Joc, FF and η of the photovoltaic cell (4) were measured, and the results are set forth in Table 1.

### Example 5

### Preparation of porous metal oxide semiconductor film-forming coating material (5)

40 g of the porous titanium oxide fine particle aggregates (1) were mixed with 108 g of a titanium oxide sol (available from Catalysts & Chemicals Industries Co., Ltd., HPW-18NR, mean particle diameter: 20 nm, TriO₂ concentration: 20% by weight). To 100 g of the resulting dispersion, a solution obtained by dissolving 16. 8 g of ethyl cellulose as a semiconductor film-forming assistant in ethanol so that the concentration would become 10% was added, and they were sufficiently mixed. Thereafter, to the mixture was added 106.2 g of terpineol as a solvent for screen printing, and they were sufficiently mixed. The resulting solution was concentrated by a rotary evaporator so that the TiO₂ concentration would become 25% by weight, whereby a porous metal oxide semiconductor film-forming coating material (5) was prepared.

### Formation of porous metal oxide semiconductor film (5)

A porous metal oxide semiconductor film (5) was formed in the same manner as in Example 1, except that the porous metal oxide semiconductor film-forming coating material (5) was used.

Film thickness, pore volume, mean pore diameter of the resulting porous metal oxide semiconductor film (5) were evaluated, and the results are set forth in Table 1.

### Adsorption of photosensitizer

A dye was adsorbed in the same manner as in Example 1, except that the glass on which the porous metal oxide semiconductor film (5) had been formed was used.

### Preparation of photovoltaic cell (5)

A photovoltaic cell (5) was prepared in the same manner as in Example 1, except that the porous metal oxide semiconductor film (5) on which the dye had been adsorbed was used.

Voc, Joc, FF and η of the photovoltaic cell (5) were measured, and the results are set forth in Table 1.

### Example 6

### Preparation of porous titanium oxide fine particle aggregates (6)

### Preparation of fibrous titanium oxide fine particles

A titanium chloride aqueous solution was diluted with pure water to prepare a titanium chloride aqueous solution having a concentration of 5% by weight in terms of TiO₂. This aqueous solution was added to aqueous ammonia of a concentration of 15% by weight adjusted to a temperature of 5°C, to perform neutralization and hydrolysis. After addition of the titanium chloride aqueous solution, the pH was 10.5. Then, the resulting gel was subjected to filtration washing to obtain a gel of orthotitanic acid having a concentration of 9% by weight in terms of TiO₂.

In 2900 g of pure water, 100 g of the gel of orthotitanic acid was dispersed, and then 800 g of aqueous hydrogen peroxide having a concentration of 35% by weight was added. With stirring, the resulting mixture was heated at 85°C for 3 hours to prepare a peroxotitanic acid aqueous solution. The resulting peroxotitanic acid aqueous solution had a concentration of 0.5% by weight in terms of TiO₂.

Subsequently, the peroxotitanic acid aqueous solution was heated at 95°C for 10 hours to obtain a titanium oxide particle dispersion. To the titanium oxide particle dispersion, tetramethylammonium hydroxide (TMAH, MW: 149.2) was added so that the molar ratio to TiO₂ in the dispersion would become 0.016. The resulting dispersion had pH of 11. Then, the dispersion was subjected to hydrothermal treatment at 230°C for 5 hours to prepare a titanium oxide particle (T-1) dispersion. The titanium oxide particles (T-1) had a mean particle diameter of 30 nm.

To the titanium oxide particle (T-1) dispersion, 70 g of a NaOH aqueous solution having a concentration of 40% by weight was added so that the molar ratio (A_{M}) / (T_{M}) of the number of moles of the alkali metal hydroxide (A_{M}) to the number of moles of TiO₂ (T_{M}) would become 10, followed by hydrothermal treatment at 150°C for 2 hours.

The resulting particles were sufficiently washed with pure water, and then by the use of a cation-exchange resin, alkali-reduced tubular titanium oxide fine particles (PT-1) were prepared. The residue of Na₂O in the particles was 0.15% by weight. The tubular titanium oxide fine particles had a mean particle length of 180 nm, a mean tube outer diameter of 10 nm, a mean tube inner diameter of 7.5 nm, an aspect ratio of 18 and a specific surface area of 450 m²/g. The particles had a crystal form of anatase type.

Next, the tubular titanium oxide fine particles (PT-1) were dried at 80°C for 10 hours and then calcined at 650°C for 3 hours to obtain fibrous titanium oxide particles (FT-1).

The resulting fibrous titanium oxide particles (FT-1) had a mean width of 7 nm, a mean length of 160 nm, an aspect ratio of 23 and a specific surface area of 75 m²/g. The particles had a crystal form of anatase type.

20 g of the fibrous titanium oxide fine particles (FT-1) and 25 g of a titanium oxide sol (available from Catalysts & Chemicals Industries Co., Ltd., HPW-18NR, mean particle diameter: 20 nm, TiO₂ concentration: 20% by weight) were mixed, and the resulting solution was mixed with 62.5 g of a peroxotitanic acid aqueous solution having a concentration of 4% by weight in terms of TiO₂. To the mixture was added water to dilute the mixture, whereby a titanium oxide fine particle dispersion having a TiO₂ concentration of 8% by weight was prepared. Then, the dispersion was fed to an opposed two-fluid nozzle and subjected to spray drying under the conditions of a throughput of 60 l/hr, an air/liquid ratio of 2000, an air flow velocity of Mach 1.1, a drying atmosphere temperature of 120°C and a humidity of 7.2% by volume.

The resulting particles were calcined at 550°C for 3 hours to prepare porous titanium oxide fine particle aggregates (6).

Mean particle diameter and pore volume of the porous titanium oxide fine particle aggregates (6) were measured, and the results are set forth in the table.

### Preparation of porous metal oxide semiconductor film-forming coating material (6)

A porous metal oxide semiconductor film-forming coating material (6) was prepared in the same manner as in Example 1, except that the porous titanium oxide fine particle aggregates (6) were used.

### Formation of porous metal oxide semiconductor film (6)

A porous metal oxide semiconductor film (6) was formed in the same manner as in Example 1, except that the porous metal oxide semiconductor film-forming coating material (6) was used, and screen printing and drying were repeated 4 times until the film thickness became 12 µm.

Film thickness, pore volume, mean pore diameter of the resulting porous metal oxide semiconductor film (6) were evaluated, and the results are set forth in Table 1.

### Adsorption of photosensitizer

A dye was adsorbed in the same manner as in Example 1, except that the glass on which the porous metal oxide semiconductor film (6) had been formed was used.

### Preparation of photovoltaic cell (6)

A photovoltaic cell (6) was prepared in the same manner as in Example 1, except that the porous metal oxide semiconductor film (6) on which the dye had been adsorbed was used.

Voc, Joc, FF and η of the photovoltaic cell (6) were measured, and the results are set forth in Table 1.

### Example 7

### Preparation of porous titanium oxide fine particle aggregates (7)

20 g of tubular titanium oxide fine particles (PT-1) prepared in the same manner as in Example 6 and 25 g of titanium oxide sol as in Example 6 was mixed, and the resulting solution was mixed with 62.5 g of a peroxotitanic acid aqueous solution having a concentration of 4% by weight in terms of TiO₂. To the mixture was added water to dilute the mixture, whereby a titanium oxide fine particle dispersion having a TiO₂ concentration of 8% by weight was prepared. Then, the dispersion was fed to an opposed two-fluid nozzle and subjected to spray drying under the conditions of a throughput of 60 l/hr, an air/liquid ratio of 2000, an air flow velocity of Mach 1.1, a drying atmosphere temperature of 120°C and a humidity of 7.2% by volume.

The resulting particles were calcined at 650°C for 3 hours to prepare porous titanium oxide fine particle aggregates (7).

Mean particle diameter and pore volume of the porous titanium oxide fine particle aggregates (7) were measured, and the results are set forth in the table.

### Preparation of porous metal oxide semiconductor film-forming coating material (7)

A porous metal oxide semiconductor film-forming coating material (7) was prepared in the same manner as in Example 1, except that the porous titanium oxide fine particle aggregates (7) were used.

### Formation of porous metal oxide semiconductor film (7)

A porous metal oxide semiconductor film (7) was formed in the same manner as in Example 1, except that the porous metal oxide semiconductor film-forming coating material (7) was used, and screen printing and drying were repeated 4 times until the film thickness became 12 µm.

Film thickness, pore volume, mean pore diameter of the resulting porous metal oxide semiconductor film (7) were evaluated, and the results are set forth in Table 1.

### Adsorption of photosensitizer

A dye was adsorbed in the same manner as in Example 1, except that the glass on which the porous metal oxide semiconductor film (7) had been formed was used.

### Preparation of photovoltaic cell (7)

A photovoltaic cell (7) was prepared in the same manner as in Example 1, except that the porous metal oxide semiconductor film (7) on which the dye had been adsorbed was used.

Voc, Joc, FF and η of the photovoltaic cell (7) were measured, and the results are set forth in Table 1.

### Example 8

### Preparation of porous titanium oxide fine particle aggregates (8)

Porous titanium oxide fine particle aggregates (8) were prepared in the same manner as in Example 1, except that a titanium oxide sol (available from Catalysts & Chemicals Industries Co., Ltd., HPW-10R, mean particle diameter: 10 nm, TiO₂ concentration: 20% by weight) was used.

Mean particle diameter and pore volume of the porous titanium oxide fine particle aggregates (8) were measured, and the results are set forth in the table.

### Preparation of porous metal oxide semiconductor film-forming coating material (8)

A porous metal oxide semiconductor film-forming coating material (8) was prepared in the same manner as in Example 1, except that the porous titanium oxide fine particle aggregates (8) were used.

### Formation of porous metal oxide semiconductor film (8)

A porous metal oxide semiconductor film (8) was formed in the same manner as in Example 1, except that the porous metal oxide semiconductor film-forming coating material (8) was used.

Film thickness, pore volume, mean pore diameter of the resulting porous metal oxide semiconductor film (8) were evaluated, and the results are set forth in Table 1.

### Adsorption of photosensitizer

A dye was adsorbed in the same manner as in Example 1, except that the glass on which the porous metal oxide semiconductor film (8) had been formed was used.

### Preparation of photovoltaic cell (8)

A photovoltaic cell (8) was prepared in the same manner as in Example 1, except that the porous metal oxide semiconductor film (8) on which the dye had been adsorbed was used.

Voc, Joc, FF and η of the photovoltaic cell (8) were measured, and the results are set forth in Table 1.

### Example 9

### Preparation of porous titanium oxide fine particle aggregates (9)

Porous titanium oxide fine particle aggregates (9) were prepared in the same manner as in Example 1, except that a titanium oxide sol (available from Catalysts & Chemicals Industries Co., Ltd., HPW-200C, mean particle diameter: 200 nm, TiO₂ concentration: 20% by weight) was used. Mean particle diameter and pore volume of the porous titanium oxide fine particle aggregates (9) were measured, and the results are set forth in Table 1.

### Preparation of porous metal oxide semiconductor film-forming coating material (9)

A porous metal oxide semiconductor film-forming coating material (9) was prepared in the same manner as in Example 1, except that the porous titanium oxide fine particle aggregates (9) were used.

### Formation of porous metal oxide semiconductor film (9)

A porous metal oxide semiconductor film (9) was formed in the same manner as in Example 1, except that the porous metal oxide semiconductor film-forming coating material (9) was used.

Film thickness, pore volume, mean pore diameter of the resulting porous metal oxide semiconductor film (9) were evaluated, and the results are set forth in Table 1.

### Adsorption of photosensitizer

A dye was adsorbed in the same manner as in Example 1, except that the glass on which the porous metal oxide semiconductor film (9) had been formed was used.

### Preparation of photovoltaic cell (9)

A photovoltaic cell (9) was prepared in the same manner as in Example 1, except that the porous metal oxide semiconductor film (9) on which the dye had been adsorbed was used.

Voc, Joc, FF and η of the photovoltaic cell (9) were measured, and the results are set forth in Table 1.

### Example 10

### Preparation of porous titanium oxide fine particle aggregates (10)

Porous titanium oxide fine particle aggregates (1) were prepared in the same manner as in Example 1.

In 40000 g of a titanium tetrachloride aqueous solution (TiO₂ concentration: 1.0% by weight), 50 g of the porous titanium oxide fine particle aggregates (1) were dispersed. The resulting dispersion was stirred at 80°C for 1 hour, then filtered, washed with pure water and then with ethanol, and dried at 120°C for 2 hours to prepare porous titanium oxide fine particle aggregates (10) on which a titanium oxide precursor had been supported.

Mean particle diameter and pore volume of the porous titanium oxide fine particle aggregates (10) were measured, and the results are set forth in the table. The amount of the titanium oxide precursor supported was 28% by weight in terms of TiO₂.

### Preparation of porous metal oxide semiconductor film-forming coating material (10)

A porous metal oxide semiconductor film-forming coating material (10) was prepared in the same manner as in Example 1, except that the porous titanium oxide fine particle aggregates (10) were used.

### Formation of porous metal oxide semiconductor film (10)

A porous metal oxide semiconductor film (10) was formed in the same manner as in Example 1, except that the porous metal oxide semiconductor film-forming coating material (10) was used.

Film thickness, pore volume, mean pore diameter of the resulting porous metal oxide semiconductor film (10) were evaluated, and the results are set forth in Table 1.

### Adsorption of photosensitizer

A dye was adsorbed in the same manner as in Example 1, except that the glass on which the porous metal oxide semiconductor film (10) had been formed was used.

### Preparation of photovoltaic cell (10)

A photovoltaic cell (10) was prepared in the same manner as in Example 1, except that the porous metal oxide semiconductor film (10) on which the dye had been adsorbed was used.

Voc, Joc, FF and η of the photovoltaic cell (10) were measured, and the results are set forth in Table 1.

### Comparative Example 1

### Preparation of porous metal oxide semiconductor film-forming coating material (R1)

To 100 g of a titanium oxide sol (available from Catalysts & Chemicals Industries Co., Ltd., HPW-18NR, mean particle diameter: 20 nm, TiO₂ concentration: 20% by weight), a solution obtained by dissolving 8 g of ethyl cellulose as a semiconductor film-forming assistant in ethanol so that the concentration would become 10% was added, and they were sufficiently mixed. Thereafter, to the mixture was added 73 g of terpineol as a solvent for screen printing, and they were sufficiently mixed. The resulting solution was concentrated by a rotary evaporator so that the TiO₂ concentration would become 20% by weight, whereby a porous metal oxide semiconductor film-forming coating material (R1) was prepared.

### Formation of porous metal oxide semiconductor film (R1)

On a transparent glass substrate on which an electrode layer of fluorine-doped tin oxide had been formed, a titanium oxide thin film (1) was formed in the same manner as in Example 1, and then screen printing of the porous metal oxide semiconductor film-forming coating material (R1) and drying were repeated 4 times until the film thickness became 12 µm. Thereafter, the resulting film was subjected to calcining/annealing at 4 50 °C to form a porous metal oxide semiconductor film (R1).

Film thickness, pore volume, mean pore diameter of the resulting porous metal oxide semiconductor film (R1) were evaluated, and the results are set forth in Table 1.

### Adsorption of photosensitizer

A dye was adsorbed in the same manner as in Example 1, except that the glass on which the porous metal oxide semiconductor film (R1) had been formed was used.

### Preparation of photovoltaic cell (R1)

A photovoltaic cell (R1) was prepared in the same manner as in Example 1, except that the porous metal oxide semiconductor film (R1) on which the dye had been adsorbed was used.

Voc, Joc, FF and η of the photovoltaic cell (R1) were measured, and the results are set forth in Table 1.

### Comparative Example 2

### Preparation of porous metal oxide semiconductor film-forming coating material (R2)

To 100 g of a dispersion obtained by mixing 20 g of fibrous titanium oxide fine particles (FT-1) prepared in the same manner as in Example 6 with 80 g of water, a solution obtained by dissolving 8 g of ethyl cellulose as a semiconductor film-forming assistant in ethanol so that the concentration would become 10% was added, and they were sufficiently mixed. Thereafter, to the mixture was added 73 g of terpineol as a solvent for screen printing, and they were sufficiently mixed. The resulting solution was concentrated by a rotary evaporator so that the TriO₂ concentration would become 20% by weight, whereby a porous metal oxide semiconductor film-forming coating material (R2) was prepared.

### Formation of porous metal oxide semiconductor film (R2)

On a transparent glass substrate on which an electrode layer of fluorine-doped tin oxide had been formed, a titanium oxide thin film (1) was formed in the same manner as in Example 1, and then screen printing of the porous metal oxide semiconductor film-forming coating material (R2) and drying were repeated 4 times until the film thickness became 12 µm. Thereafter, the resulting film was subjected to calcining/annealing at 450°C to form a porous metal oxide semiconductor film (R2).

Film thickness, pore volume, mean pore diameter of the resulting porous metal oxide semiconductor film (R2) were evaluated, and the results are set forth in Table 1.

### Adsorption of photosensitizer

A dye was adsorbed in the same manner as in Example 1, except that the glass on which the porous metal oxide semiconductor film (R2) had been formed was used.

### Preparation of photovoltaic cell (R2)

A photovoltaic cell (R2) was prepared in the same manner as in Example 1, except that the porous metal oxide semiconductor film (R2) on which the dye had been adsorbed was used.

Voc, Joc, FF and η of the photovoltaic cell (R2) were measured, and the results are set forth in Table 1.

### Comparative Example 3

### Preparation of porous metal oxide semiconductor film-forming coating material (R3)

To 100 g of a dispersion obtained by mixing 20 g of tubular titanium oxide fine particles (PT-1) prepared in the same manner as in Example 6 with 80 g of water, a solution obtained by dissolving 8 g of ethyl cellulose as a semiconductor film-forming assistant in ethanol so that the concentration would become 10% was added, and they were sufficiently mixed. Thereafter, to the mixture was added 73 g of terpineol as a solvent for screen printing, and they were sufficiently mixed. The resulting solution was concentrated by a rotary evaporator so that the TiO₂ concentration would become 20% by weight, whereby a porous metal oxide semiconductor film-forming coating material (R3) was prepared.

### Formation of porous metal oxide semiconductor film (R3)

On a transparent glass substrate on which an electrode layer of fluorine-doped tin oxide had been formed, a titanium oxide thin film (1) was formed in the same manner as in Example 1, and then screen printing of the porous metal oxide semiconductor film-forming coating material (R3) and drying were repeated 4 times until the film thickness became 12 µm. Thereafter, the resulting film was subjected to calcining/annealing at 450°C to form a porous metal oxide semiconductor film (R3).

Film thickness, pore volume, mean pore diameter of the resulting porous metal oxide semiconductor film (R3) were evaluated, and the results are set forth in Table 1.

### Adsorption of photosensitizer

A dye was adsorbed in the same manner as in Example 1, except that the glass on which the porous metal oxide semiconductor film (R3) had been formed was used.

### Preparation of photovoltaic cell (R3)

A photovoltaic cell (R3) was prepared in the same manner as in Example 1, except that the porous metal oxide semiconductor film (R3) on which the dye had been adsorbed was used.

Voc, Joc, FF and η of the photovoltaic cell (R3) were measured, and the results are set forth in Table 1.

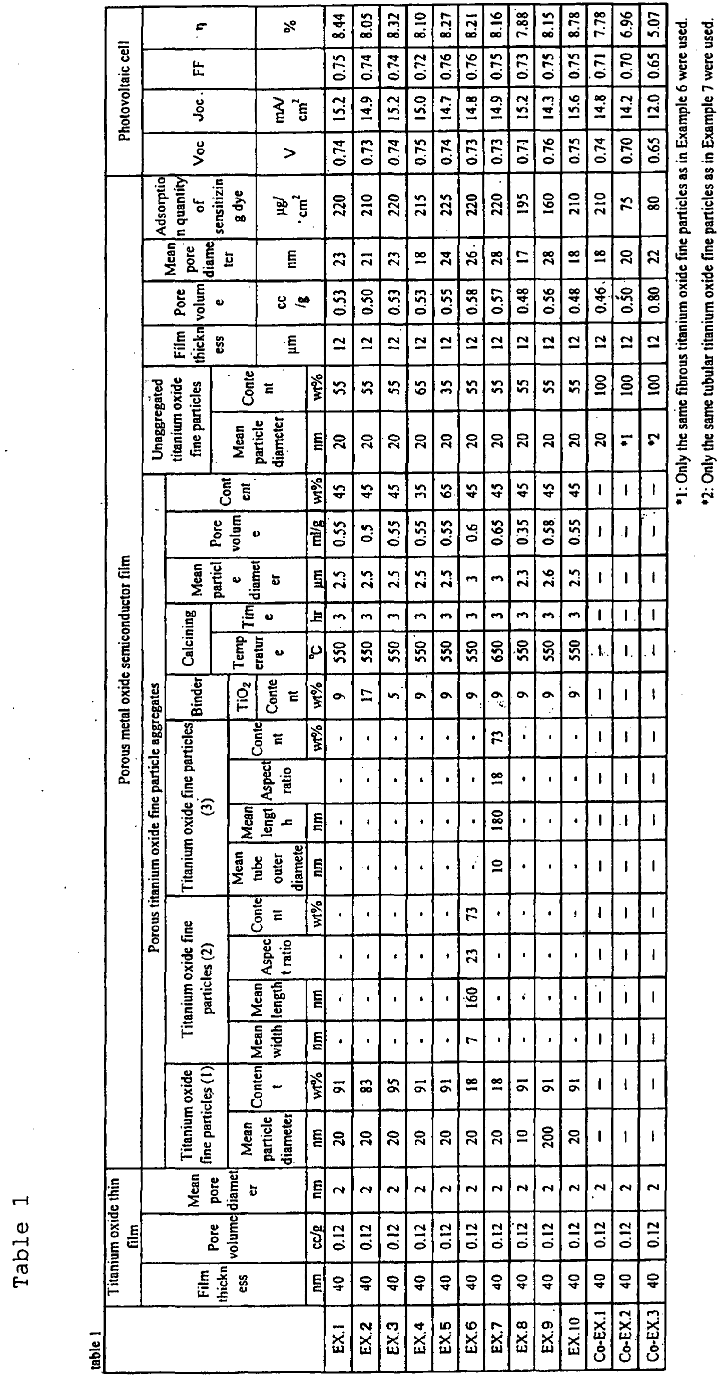

## Claims

1. A coating material for forming a porous metal oxide semiconductor film for a photovoltaic cell, **characterised by** comprising:
porous titanium oxide fine particle aggregates having a mean particle diameter of 0.5 to 10 µm and a pore volume of 0.1 to 0.8 ml/g, and
unaggregated titanium oxide fine particles having a mean particle diameter of 5 to 400 nm,
wherein the porous titanium oxide fine particle aggregate is an aggregate of at least one kind of fine particles selected from the group consisting of:
(1) particulate titanium oxide fine particles having a mean particle diameter of 5 to 400 nm,
(2) fibrous titanium oxide fine particles having a mean width (W_{F}) of 5 to 40 nm, a mean length (L_{F}) of 25 to 1000 nm and an aspect ratio (W_{F})/(L_{F}) of 5 to 200, and
(3) tubular titanium oxide fine particles having a mean tube outer diameter (Dₒᵤₜ) of 5 to 40 nm, a mean length (Lₚ) of 25 to 1000 nm and an aspect ratio (Lₚ)/(Dₒᵤₜ) of 5 to 200.

2. The coating material for forming a porous metal oxide semiconductor film for a photovoltaic cell as claimed in claim 1, wherein the porous titanium oxide fine particle aggregates further contain a titanium oxide binder selected from a gel or a sol of orthotitanic acid, peroxotitanic acid, and a titania sol.

3. The coating material for forming a porous metal oxide semiconductor film for a photovoltaic cell as claimed in claim 1 or 2, wherein the porous titanium oxide fine particle aggregates support a finely divided titanium oxide precursor on their surfaces.

4. The coating material for forming a porous metal oxide semiconductor film for a photovoltaic cell as claimed in any one of claims 1 to 3, wherein the porous titanium oxide fine particle aggregates have been treated with a titanium compound.

5. Use of a coating material according to any one of claims 1 to 4 in the manufacture of a photovoltaic cell comprising:
a first substrate (5) having an electrode layer (1) on its surface and having a porous metal oxide semiconductor film (2) which has adsorbed a photosensitizer and is formed on the surface of the electrode layer (1),
a second substrate (6) having an electrode layer (3) on its surface,
said first substrate (5) and said second substrate (6) being arranged in such a manner that the said electrode layers face each other, and
an electrolyte layer (4) which is provided between the porous metal oxide semiconductor film (2) and the electrode layer (3).

6. Use as claimed in claim 5, wherein the content of the porous titanium oxide fine particle aggregates in the semiconductor film (2) is in the range of 30 to 70% by weight, and the content of the unaggregated titanium oxide fine particles is in the range of 30 to 70% by weight, with the proviso that the total of the aggregates and the unaggregated fine particles is 100% by weight.

7. Use as claimed in claim 5 or 6, wherein a titanium oxide thin film (7) is provided between the electrode layer (1) and the porous metal oxide semiconductor film (2).

8. Use as claimed in claim 7, wherein the titanium oxide thin film (7) has a film thickness of 10 to 70 nm, a pore volume of 0.01 to 0.20 ml/g and a mean pore diameter of 0.5 to 5.0 nm.

## Patentansprüche

1. Ein Beschichtungsmaterial zum Ausbilden einer porösen Metalloxid-Halbleiterschicht für eine photovoltaische Zelle, **gekennzeichnet durch** aufweisend:
poröse Titanoxidfeinpartikelaggregate mit einem mittleren Partikeldurchmesser von 0,5 bis 10 µm und einem Porenvolumen von 0,1 bis 0,8 ml/g, und
nicht aggregierte Titanoxidfeinpartikel mit einem mittleren Partikeldurchmesser von 5 bis 400 nm,
wobei das poröse Titanoxidfeinpartikelaggregat ein Aggregat von zumindest einer Art von Feinpartikeln ist, ausgewählt aus der Gruppe bestehend aus:
(1)partikelförmigen Titanoxidfeinpartikeln mit einem mittleren Partikeldurchmesser von 5 bis 400 nm,
(2)faserigen Titanoxidfeinpartikeln mit einer mittleren Breite (W_{F}) von 5 bis 40 nm, einer mittleren Länge (L_{F}) von 25 bis 1000 nm und einem Aspektverhältnis (W_{F})/( L_{F}) von 5 bis 200, und
(3)röhrenförmigen Titanoxidfeinpartikeln mit einem mittleren Röhrenaußendurchmesser (D_{außen}) von 5 bis 40 nm, einer mittleren Länge (L_{P}) von 25 bis 1000 nm und einem Aspektverhältnis (L_{P})/( D_{außen}) von 5 bis 200.

2. Das Beschichtungsmaterial zum Ausbilden einer porösen Metalloxid-Halbleiterschicht für eine photovoltaische Zelle, wie in Anspruch 1 beansprucht, wobei die porösen Titanoxidfeinpartikelaggregate weiter ein Titanoxidbindemittel umfassen, ausgewählt aus einem Gel oder einem Sol von Orthotitansäure, Peroxotitansäure und einem Titandioxidsol.

3. Das Beschichtungsmaterial zum Ausbilden einer porösen Metalloxid-Halbleiterschicht für eine photovoltaische Zelle, wie in Anspruch 1 oder 2 beansprucht, wobei die porösen Titanoxidfeinpartikelaggregate einen fein verteilten Titanoxidvorläufer auf ihren Oberflächen tragen.

4. Das Beschichtungsmaterial zum Ausbilden einer porösen Metalloxid-Halbleiterschicht für eine photovoltaische Zelle, wie in irgendeinem der Ansprüche 1 bis 3 beansprucht, wobei die porösen Titanoxidfeinpartikelaggregate mit einer Titanverbindung behandelt worden sind.

5. Verwendung eines Beschichtungsmaterials gemäß irgendeinem der Ansprüche 1 bis 4 bei der Herstellung einer photovoltaischen Zelle aufweisend:
ein erstes Substrat (5) mit einer Elektrodenschicht (1) auf seiner Oberfläche und mit einer porösen Metalloxid-Halbleiterschicht (2), welche einen Photosensibilisator absorbiert hat und auf der Oberfläche von der Elektrodenschicht (1) ausgebildet ist,
ein zweites Substrat (6) mit einer Elektrodenschicht (3) auf seiner Oberfläche,
das besagte erste Substrat (5) und das besagte zweite Substrat (6) sind auf eine solche Weise angeordnet, dass die besagten Elektrodenschichten sich gegenüberstehen, und
eine Elektrolytschicht (4), welche zwischen der porösen Metalloxid-Halbleiterschicht (2) und der Elektrodenschicht (3) bereitgestellt ist.

6. Verwendung wie in Anspruch 5 beansprucht, wobei der Gehalt von den porösen Titanoxidfeinpartikelaggregaten in der Halbleiterschicht (2) im Bereich von 30 bis 70 Gewichtsprozent liegt und der Gehalt von den nicht aggregierten Titanoxidfeinpartikeln im Bereich von 30 bis 70 Gewichtsprozent liegt, unter der Bedingung, dass die Summe der Aggregate und der nicht aggregierten Feinpartikel bei 100 Gewichtsprozent liegt.

7. Verwendung wie in Anspruch 5 oder 6 beansprucht, wobei eine dünne Titanoxidschicht (7) zwischen der Elektrodenschicht (1) und der porösen Metalloxid-Halbleiterschicht (2) bereitgestellt ist.

8. Verwendung wie in Anspruch 7 beansprucht, wobei die dünne Titanoxidschicht (7) eine Schichtdicke von 10 bis 70 nm, ein Porenvolumen von 0,01 bis 0,20 ml/g und einen mittleren Porendurchmesser von 0,5 bis 5,0 nm hat.

## Revendications

1. Matériau de revêtement pour la formation d'un film de semi-conducteur d'oxyde métallique poreux pour une cellule photovoltaïque, **caractérisé en ce qu'**il comprend :
des agrégats de fines particules d'oxyde de titane poreux ayant un diamètre particulaire moyen de 0,5 à 10 µm et un volume de pores de 0,1 à 0,8 mL/g, et
de fines particules d'oxyde de titane non agrégées ayant un diamètre particulaire moyen de 5 à 400 nm,
dans lequel l'agrégat de fines particules d'oxyde de titane poreux est un agrégat d'au moins un type de fines particules choisies dans le groupe constitué des suivantes :
(1) de fines particules d'oxyde de titane particulaires ayant un diamètre particulaire moyen de 5 à 400 nm,
(2) de fines particules d'oxyde de titane fibreuses ayant une largeur moyenne (W_{F}) de 5 à 40 nm, une longueur moyenne (L_{F}) de 25 à 1000 nm et un rapport d'aspect (W_{F})/(L_{F}) de 5 à 200, et
(3) de fines particules d'oxyde de titane tubulaires ayant un diamètre extérieur de tube moyen (Dₒᵤₜ) de 5 à 40 nm, une longueur moyenne (Lₚ) de 25 à 1000 nm et un rapport d'aspect (Lₚ)/(Dₒᵤₜ) de 5 à 200.

2. Matériau de revêtement pour la formation d'un film semi-conducteur d'oxyde métallique poreux pour une cellule photovoltaïque selon la revendication 1, dans lequel les agrégats de fines particules d'oxyde de titane poreux contiennent en outre un liant d'oxyde de titane choisi parmi un gel ou un sol d'acide orthotitanique, d'acide peroxy-titanique et un sol d'oxyde de titane.

3. Matériau de revêtement pour la formation d'un film semi-conducteur d'oxyde métallique poreux pour une cellule photovoltaïque selon la revendication 1 ou la revendication 2, dans lequel les agrégats de fines particules d'oxyde de titane poreux supportent un précurseur d'oxyde de titane finement divisé sur leurs surfaces.

4. Matériau de revêtement pour la formation d'un film semi-conducteur d'oxyde métallique poreux pour une cellule photovoltaïque selon l'une quelconque des revendications 1 à 3, dans lequel les agrégats de fines particules d'oxyde de titane poreux ont été traités avec un composé de titane.

5. Utilisation d'un matériau de revêtement selon l'une quelconque des revendications 1 à 4 dans la fabrication d'une cellule photovoltaïque, comprenant :
un premier substrat (5) ayant une couche d'électrode (1) à sa surface et ayant un film semi-conducteur d'oxyde métallique poreux (2) qui a adsorbé un photosensibilisateur et est formé à la surface de la couche d'électrode (1),
un second substrat (6) ayant une couche d'électrode (3) à sa surface,
ledit premier substrat (5) et ledit second substrat (6) étant aménagés de manière que lesdites couches d'électrode soient en regard l'une de l'autre, et
une couche d'électrolyte (4) qui est disposée entre le film semi-conducteur d'oxyde métallique poreux (2) et la couche d'électrode (3).

6. Utilisation selon la revendication 5, dans laquelle le contenu des agrégats de fines particules d'oxyde de titane poreux dans le film semi-conducteur (2) se situe dans la plage de 30 à 70 % en poids et le contenu des fines particules d'oxyde de titane non agrégées se situe dans la plage de 30 à 70 % en poids, étant entendu que le total des agrégats et des fines particules non agrégées est de 100 % en poids.

7. Utilisation selon la revendication 5 ou la revendication 6, dans laquelle un film mince d'oxyde de titane (7) est disposé entre la couche d'électrode (1) et le film semi-conducteur d'oxyde métallique poreux (2).

8. Utilisation selon la revendication 7, dans laquelle le film mince d'oxyde de titane (7) a une épaisseur de film de 10 à 70 nm, un volume de pores de 0,01 à 0,20 mL/g et un diamètre de pores moyen de 0,5 à 5,0 nm.
